(19) Europäisches Patentamt
European Patent Office
Office européen des brevets

(11) **EP 0 842 235 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **C09D 171/02**, C09D 167/00, C09D 133/06, C09D 5/00, C09D 7/00

(21) Anmeldenummer: **96927632.8**

(22) Anmeldetag: **30.07.1996**

(86) Internationale Anmeldenummer:
**PCT/EP96/03348**

(87) Internationale Veröffentlichungsnummer:
**WO 97/006219 (20.02.1997 Gazette 1997/09)**

(54) **WÄSSRIGE ÜBERZUGSMITTEL UNTER VERWENDUNG VON POLYALKYLENGLYKOLDIALKYLETHERN UND VERFAHREN ZUR MEHRSCHICHTLACKIERUNG**

AQUEOUS COATING MATERIALS MAKING USE OF POLYALKYLENEGLYCOL DIALKYL ETHERS, AND METHOD OF PRODUCING MULTI-LAYER COATS USING SUCH COATING MATERIALS

AGENT DE RECOUVREMENT AQUEUX ET A BASE D'ETHERS DE POLYALKYLENE GLYCOLDIALKYLE ET PROCEDE D'APPLICATION DE COUCHES MULTIPLES

(84) Benannte Vertragsstaaten:
**BE DE ES FR GB IT NL PT SE**

(30) Priorität: **05.08.1995 DE 19528878**

(43) Veröffentlichungstag der Anmeldung:
**20.05.1998 Patentblatt 1998/21**

(73) Patentinhaber: **E.I. DU PONT DE NEMOURS AND COMPANY**
**Wilmington Delaware 19898 (US)**

(72) Erfinder:
• **BRENKE, Stephan**
  **D-42113 Wuppertal (DE)**
• **DUECOFFRE, Volker**
  **D-42119 Wuppertal (DE)**
• **DOEBLER, Klaus-Peter**
  **D-42477 Radevormwald (DE)**
• **LIEVERZ, Frank**
  **D-42277 Wuppertal (DE)**
• **SCHUBERT, Walter**
  **D-42349 Wuppertal (DE)**
• **TÄNNERT, Klaus**
  **D-42389 Wuppertal (DE)**

(74) Vertreter: **Gille Hrabal Struck Neidlein Prop Roos Patentanwälte**
**Brucknerstrasse 20**
**40593 Düsseldorf (DE)**

(56) Entgegenhaltungen:
EP-A- 0 368 499        EP-A- 0 391 271
WO-A-90/03229          WO-A-95/31510
GB-A- 1 158 555

• **DATABASE WPI Derwent Publications Ltd., London, GB; AN 82-46847e(23) XP002022803 & JP,A,57 070 120 (YUHO SHOKAI KK) , 30.April 1982**

**Beschreibung**

Die Erfindung betrifft ein hitzehärtbares wäßriges Überzugsmittel, das insbesondere für die Herstellung von Lackierungen, insbesondere für Mehrschichtlackierungen beispielsweise als Hydrofüller, Wasserbasislack und bevorzugt als Wasserklar- oder Wasserdecklack geeignet ist.

Wäßrige Lacke, insbesondere Klarlacke, werden in der Literatur beschrieben. In der DE-A-28 06 497 wird eine Mehrschichtlackierung mit einem Klarlacküberzug als Deckschicht beschrieben, wobei dieser Klarlack auch wasserverdünnbar sein soll. Wasserverdünnbare Klarlacke werden jedoch nicht definiert. Als Basislack-Überzugsmittel werden Polyester mit hohem Molgewicht und hoher Viskosität, gelöst in Xylol, verwendet, die mit Acrylharzen gemischt werden. Derartige Lacke haben einen hohen Bedarf an Neutralisationsmittel. Die DE-A-35 32 617 beschreibt wäßrige Beschichtungsmassen auf der Basis von hochwirksamen Harzen, beispielsweise Polyesterharzen, in denen Harzpartikel, bei denen es sich um Acrylharze handeln kann, dispergiert sind. Die erhaltenen Massen sind instabil und unterliegen einer raschen Phasentrennung.

In der DE-A-35 37 855 wird die Verwendung von sauren Polykondensaten auf der Basis von Acrylharzen und Polyetherpolyolen beschrieben, die nach ihrer Neutralisation als wasserverdünnbare Bindemittel zur Herstellung von wasserverdünnbaren Einbrennfüllern, Decklacken oder Klarlacken eingesetzt werden können. Es hat sich jedoch gezeigt, daß auch nach dem Einbrennen dieser Systeme Feuchtraum- und Schwefelsäurebeständigkeit unzureichend sind.

Auch in der EP-A-0 365 775 werden saure Polyacrylate beschrieben, die nach ihrer Neutralisation und Verdünnung zur Herstellung wasserverdünnbarer Decklacke dienen. Als Vernetzungsmittel wird Melaminharz eingesetzt. Diese Überzugsmittel weisen einen unbefriedigenden High-solid-Wert auf, d.h. sie benötigen einen hohen Gehalt an organischen Lösemitteln in der Größenordnung von 27 g und mehr bezogen auf 100 g Harzfestkörpergehalt (entsprechend einem High-solid-Wert von 73 und weniger). In der DE-A-42 23 183 werden wäßrige Emulsionen auf der Basis von Acrylcopolymeren beschrieben, die im Schöße eines oder mehrerer niedermolekularer Polyester synthetisiert und anschließend mit einem Gemisch aus Melaminharzen und verkappten Polyisocyanaten vernetzt werden. Die DE-A-38 32 826 beschreibt ein Verfahren zur Herstellung eines Überzuges auf der Basis eines wasserverdünnbaren Polyacrylatharzes und eines Aminoplastharzes. In der DE-A-39 10 829 wird ein wasserlöslicher Klarlack beschrieben, der sich im wesentlichen aus einem Oligoesteracrylatharz und einem Melaminharz zusammensetzt.

In der Praxis wurden in wäßrigen Lacksystemen Ethylenglykol-, Propylenglykol-, Diethylenglykol- und Dipropylenglykol-monoalkylether und -dialkylether als Lösemittel eingesetzt. Hierbei ergeben sich jedoch Nachteile. Es müssen eine starke Ablaufneigung und eine ausgeprägte Kocherneigung bereits bei niedrigen Schichtdicken in Kauf genommen werden.

In der EP-A-0 051 483 werden Epoxid-Dispersionen beschrieben, die Glycidylgruppen enthaltende Epoxidharze, zweiwertige Phenole und Diglycidylether von Polyoxyalkylenglykolen enthalten. Als Lösemittel können Glykole oder Glykolether vorhanden sein.

Aufgabe der Erfindung ist die Bereitstellung eines wäßrigen Überzugsmittels, das insbesondere geeignet ist für chemikalienfeste und vergilbungsfreie Beschichtungen mit sehr gutem Decklackstand, sehr geringer Ablaufneigung und insbesondere sehr hoher Kochsicherheit, wobei das Überzugsmittel eine hohe Lagerstabilität besitzen soll. Das Überzugsmittel soll einen hohen Verarbeitungsfestkörper aufweisen.

Es hat sich gezeigt, dass diese Aufgabe gelöst werden kann durch die einen Gegenstand der Erfindung bildenden wässrigen Überzugsmittelzusammensetzungen, enthaltend Bindemittel auf der Basis von wasserverdünnbaren Polvolverbindungen in der Form von hydroxyfunktionellen Poly(meth)acrylaten, Polyurethanen, Polyethern, Polyestern und/oder Polyester-modifizierten Poly(meth)acrylaten, zusammen mit Aminoplastharzen, Phenoplastharzen und/oder Polyisocyanaten, die frei und/oder verkappt sein können, die gekennzeichnet sind durch den Gehalt an einem oder mehreren Poly-($C_2$ bis $C_3$)alkylenglykol-di($C_1$ bis $C_4$)alkylethern, wobei diese 3 bis 10 von $C_2$ und/oder $C_3$-Alkylenglykolen abgeleitete Einheiten aufweisen.

Polyalkylenglykoldialkylether, wie sie erfindungsgemäß eingesetzt werden, sind im Handel erhältlich, beispielsweise Polyethylenglykol-di-n-butylether, ein Handelsprodukt, das z.B. in der Firmenschrift "Polyglycol BB 300" der Firma Hoechst beschrieben wird und bisher als Absorptionsmittel, beispielsweise zur Spülung von Abluft verwendet wurde.

Einen Gegenstand der Erfindung bildet auch die Verwendung von Poly-($C_2$ bis $C_3$)alkylenglykol-di($C_1$ bis $C_4$)alkylethern, weiche 3 bis 10 von $C_2$ und/oder $C_3$-Alkylenglykolen abgeleitete Einheiten aufweisen, als Zusatz zu wässrigen Überzugsmittelzusammensetzungen auf der Basis von wasserverdünnbaren Polyolverbindungen In der Form von hydroxyfunktionellen Poly(meth)acrylaten, Polyurethanen, Polyethem, Polyestern und/oder Polyester-modifizierten Poly(meth)acrylaten, zusammen mit Aminoplastharzen, Phenoplastharzen und/oder Polyisocyanaten, die frei und/oder verkappt sein können.

Die erfindungsgemäß eingesetzten Poly-($C_2$ bis $C_3$)alkylenglykol-di-($C_1$ bis $C_4$)alkylether werden im folgenden als "Polyalkylenglykoldialkylether" bezeichnet.

Die erfindungsgemäß einsetzbaren Polyalkylenglykoldialkylether enthalten 3 bis 10, bevorzugt bis zu 6 Einheiten, die von $C_2$ bis $C_3$ Alkylenglykolen abgeleitet sind. Bei den Alkylengruppen kann es sich um Ethylengruppen und/oder Propylengruppen handeln, wobei die Propylengruppen 1,3- und/oder 1,2- bzw. 2,3-Propylengruppen sein können.

Die Ethylen- und Propylengruppen können auch im Gemisch vorliegen. Wichtig ist, daß es sich bei den eingesetzten Verbindungen um Dialkylether handelt, d.h., daß keine endständigen freien OH-Gruppen vorliegen. Die Veretherungsalkohole sind Alkohole mit 1 bis 4 Kohlenstoffatomen; die Ether können mit den gleichen Alkoholen oder mit verschiedenen Alkoholen verethert sein. Bevorzugt sind $C_1$, d.h. Methylether und $C_4$, d.h. Butylether, insbesondere n-Butylether. Ein bevorzugtes Beispiel ist der Polyethylenglykol-di-n-butylether, insbesondere mit 3 bis 6 von Ethylenglykol abgeleiteten Einheiten. Bei den eingesetzten Polyalkylenglykoldialkylethern kann es sich um Gemische handeln. Beispielsweise können Polyethylenglykoldialkylether, z.B. -di-n-butylether mit 3 oder mehreren Ethylenglykoleinheiten vorliegen.

Die erfindungsgemäß bevorzugt verwendbaren Polyalkylenglykoldialkylether lassen sich beispielsweise durch folgende allgemeine Formel darstellen:

$$RO - (A\text{-}O)_n - A - O - R$$

worin

R = $C_1$ bis $C_4$-Alkyl, wobei die Reste R gleich oder verschieden sein können,
A = Ethylen, 1,2-Propylen bzw. 2,3-Propylen und/oder 1,3-Propylen, wobei die Reste A gleich oder verschieden sein können, und
n = eine ganze Zahl von 2 oder mehr, bevorzugt bis zu 9, besonders bevorzugt bis zu 5.

Die in den erfindungsgemäßen wässrigen Überzugsmittelzusammensetzungen enthaltenden Bindemittel können auf wasserverdünnbaren oligomeren oder polymeren Polyolverbindungen in der Form von hydroxyfunktionellen Poly(meth)acrylaten, Polyurethanen, Polyethern, Polyestern und/oder Polyester-modifizierten Poly(meth)actylaten basieren. Bevorzugt liegt der Gehalt an Polyalkylenglykoldialkylethern bei 1 bis 20 Gew.-% bezogen auf die Summe aus Polyolverbindungen, Vernetzer in der Form von Aminoplastharzen, Phenoplastharzen und/oder Polyisocyanaten und Polyalkylenglykol-dialkylether.

Bei den wasserverdünnbaren oligomeren oder polymeren Polyolverbindungen kann es sich beispielsweise um solche mit einer Hydroxytzahl von 20 bis 300 mg KOH/g, insbesondere 50 bis 300 mg KOH/g, bevorzugt 100 bis 200 mg KOH/g, einer Säurezahl von 0 bis 100 mg KOH/g, Insbesondere 0 bis 50 mg KOH/g, bevorzugt 10 bis 35 mg KOH/g handeln. Das Zahlenmittel des Molekulargewichts kann beispielsweise bei 500 bis 10000, bevorzugt bei 1000 bis 5000 liegen. Bevorzugte Glasübergangstemperaturen der Polyolverbindungen liegen bei -20 bis +70°C, besonders bevorzugt 0 bis 50°C.

Als Vernetzer werden übliche Vernetzer, nämlich Aminoplastharze, Phenoplastharze und/oder freie und/oder verkappte Polyisocyanate eingesetzt. Gemäß einer bevorzugten Ausführungsform enthalten die erfindungsgemäßen wässrigen Überzugsmittel 40 bis 90 Gew.-% der Polyolkomponente (im folgenden als Komponente A) bezeichnet), 10 bis 60 Gew.-% eines oder mehrerer Vernetzer (im folgenden als Komponente B) bezeichnet) und 1 bis 20 Gew.-% der erfindungsgemäß einsetzbaren Polyalkylenglykoldialkylether (im folgenden als Komponente C) bezeichnet), wobei sich die Summe der Komponenten A) bis C) jeweils auf 100 Gew.-% addiert. Die Überzugsmittel enthalten zusätzlich Wasser sowie gegebenenfalls ein oder mehrere organische Lösemittel und weitere lacküblichen Additive.

Die im erfindungsgemäßen Überzugsmittel als Komponente A) enthaltenen Polyole sind solche auf der Basis hydroxyfunktioneller (Meth)acryl-Copolymerer, Polyester, Polyester-modifizierter (Meth)acryl-Copolymerer, Polyether und/oder Polyurethane. Unter (Meth)acryl ist hier Acryl und/oder Methacryl zu verstehen.

Die Herstellung der (Meth)acrylcopolymerisate kann durch Polymerisation nach üblichen Verfahren, wie z.B. der Substanz-, Lösungs- oder Perlpolymerisation durchgeführt werden. Die verschiedenen Polymerisationsverfahren sind dem Fachmann gut bekannt und beispielsweise beschrieben in: Houben-Weyl, Methoden der organischen Chemie, 4. Aufl., Band 14/1, Seiten 24 bis 255 (1961). Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel im Reaktionsgefäß vorgelegt, auf Siedetemperatur geheizt und ein Gemisch aus den Monomeren mit den zur Polymerisation verwendeten Polymerisationsinitiatoren kontinuierlich in einer bestimmten Zeit zudosiert. Die Polymerisationstemperaturen liegen zwischen 60°C und 160°C, bevorzugt zwischen 120°C und 150°C.

Die verwendeten (Meth)acrylmonomeren können nicht-funktionalisiert, hydroxyfunktionalisiert oder carboxyfunktionalisiert sein. Desweiteren können auch weitere davon unterschiedliche ethylenisch ungesättigte Monomere eingesetzt werden.

Beispiele für nicht-funktionalisierte (Meth)acrylate sind z.B. langkettige, verzweigte oder unverzweigte ungesättigte Monomere, wie Alkyl(meth)acrylate mit $C_8$-$C_{18}$-Ketten im Alkylteil, wie z.B. 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat-1214, Isobornyl(meth)acrylat, 4-Tertiärbutylcyclohexylmethacrylat. Weitere Beispiele sind kurz- oder mittelkettige, verzweigte oder unverzweigte ungesättigte Monomere, wie Alkyl(meth)acrylate mit $C_1$-$C_7$-Ketten im Alkylteil, z.B. Methyl(meth)acrylat, Ethyl(meth)acrylat, Propyl(meth)acrylat, Butyl(meth)acrylat, Isopropyl(meth)acrylat, Isobutyl(meth)acrylat, Tertiärbutyl(meth)acrylat, Pentyl(meth)acrylat, Hexyl(meth)acrylat, Cyclohexyl(meth)acrylat.

Weitere geeignete nicht-funktionalisierte polymerisierbare Komponenten sind monovinylaromatische Verbindungen. Vorzugsweise enthalten sie 8 bis 10 Kohlenstoffatome je Molekül. Beispiele für geeignete Verbindungen sind Styrol und Styrolderivate, wie Vinyltoluol, $\alpha$-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Auch möglich ist die Verwendung des Vinylesters der Versaticsäure (Handelsbezeichnung VEOVA 10 der Shell AG).

Beispiele für weitere geeignete nicht-funktionalisierte ethylenisch ungesättigte Monomere sind die Alkylester der Malein-, Fumar-, Tetrahydrophthal-, Croton-, Isocroton-, Vinylessig- und Itaconsäure, wie z.B. die entsprechenden Methyl-, Ethyl-, Propyl-, Butyl-, Isopropyl-, Isobutyl-, Pentyl-, Amyl-, Isoamyl-, Hexyl-, Cyclohexyl-, 2-Ethylhexyl-, Octyl-, 3,5,5,-Trimethylhexyl-, Decyl-, Dodecyl-, Hexadecyl-, Octadecyl- und Octadecenylester.

Die verwendeten (Meth)acrylmonomere können primäre oder sekundäre Hydroxyfunktionen tragen. Beispiele für Monomere mit primären Hydroxyfunktionen sind Hydroxyalkylester $\alpha,\beta$-ungesättigter Carbonsäuren, wie z.B. Acrylsäure und/oder Methacrylsäure mit einem $C_2$-$C_{18}$-Hydroxyalkylrest wie Hydroxyethyl(meth)acrylat, Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Beispiele für Monomere mit sekundären OH-Funktionen sind Hydroxypropyl(meth)acrylat, Addukte aus Glycidyl(meth)acrylat und gesättigten kurzkettigen Säuren mit $C_1$-$C_3$-Alkylresten, z.B. Essigsäure oder Propionsäure, Umsetzungsprodukte aus Glycidyl(meth)acrylat mit gesättigten verzweigten oder unverzweigten Fettsäuren mit $C_4$-$C_{20}$-Alkylresten, z.B. Butansäure, Capronsäure, Laurinsäure, Palmitinsäure, Stearinsäure, Arachidonsäure sowie Addukte aus Glycidylestern stark verzweigter Monocarbonsäuren (Glycidylester der Versaticsäure ist unter dem Handelsnamen Cardura E erhältlich) mit ungesättigten COOHfunktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid. Die Umsetzung der Acrylsäure oder Methacrylsäure mit dem Glycidylester einer Carbonsäure mit einem tertiären $\alpha$-Kohlenstoff kann vor, während oder nach der Polymerisationsreaktion erfolgen.

Beispiele für geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie $\beta$-Carboxyethylacrylat und Addukte von Hydroxyalkylestern der Acrylsäure und/oder (Meth)acrylsäure mit Carbonsäureanhydriden, wie z.B. der Phthalsäure-mono-2-methacryloyloxyethylester, sowie Halbester von Maleinsäureanhydrid durch Anlagerung von gesättigten aliphatischen Alkoholen wie z.B. Ethanol, Propanol, Butanol und/oder Isobutanol.

Ebenfalls möglich ist die Verwendung einer geringen Menge von (Meth)acrylmonomeren mit endständigen tert.-Aminogruppen. Beispiele für solche Monomere sind tert.-Aminomethyl(meth)acrylat oder tert.-Aminopropyl(meth)acrylat.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Hexandioldi(meth)acrylat, Ethylenglykoldi(meth)acrylat, Butandioldi(meth)acrylat, Hexamethylenbis(meth)acrylat, Trimethylolpropantri(meth)acrylat und ähnliche Verbindungen.

Ebenfalls einsetzbar sind Siloxan-modifizierte Monomere wie z.B. Trimethylsiloxyethyl(meth)acrylat und Trimethylsiloxypropyl(meth)acrylat.

Beispiele für verwendbare Polymerisationsinitiatoren sind Radikalinitiatoren, wie Dialkylperoxide, wie Di-tert.-Butylperoxid, Di-Cumylperoxid; Diacylperoxid, wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethyl-hexanoat; Peroxiddicarbonate, wie Di-2-ethylhexylperoxydicarbonat, Dicyclohexylperoxydicarbonat; Perketale, wie 1,1-bis-(tert.-Butylperoxy)-3,5,5-trimethyl-cyclohexan, 2,2-Bis-(tert.-Butylperoxy)cyclohexan; Ketonperoxide, wie Cyclohexanonperoxid, Methylisobutylketonperoxid und Azoverbindungen, wie 2,2'Azo-bis-(2,4-dimethyl-valeronitril9, 2,2'-Azo-bis-(2-methylbutyronitril), 1,11-Azo-bis-cyclohexancarbonitril, Azo-bis-isobutyronitril, sowie C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt. Bei der Polymerisation können die Initiatoren und Monomeren auch getrennt bzw. zeitlich versetzt zudosiert werden.

Die Polymerisation findet bevorzugt in organischen Lösemitteln statt. Von Vorteil ist es, wenn zumindest ein Teil dieses Lösemittelgemisches aus Poly-($C_2$ bis $C_3$)alkylenglykol-di-($C_1$ bis $C_4$)alkylether besteht.

Zur Regelung des Molekulargewichtes können insbesondere bei der bevorzugten Lösungspolymerisation Kettenüberträger mitverwendet werden. Beispiele hierfür sind Mercaptane, Thioglykolsäureester, Chlorkohlenwasserstoffe, Cumol und dimeres $\alpha$-Methylstyrol.

Die beschriebenen (Meth)acrylcopolymeren sollen bevorzugt eine Hydroxylzahl von 50 bis 300 mg KOH/g, bevorzugt 100 bis 200 mg KOH/g, eine Säurezahl von 0 bis 50 mg KOH/g, bevorzugt 10 bis 35 mg KOH/g, ein Zahlenmittel des Molakulargewichts (Mn) von 500 bis 10000, bevorzugt 1000 bis 5000, und eine Glasübergangstemperatur von -20 bis +70°C, bevorzugt 0 bis 50°C besitzen.

Als Bindemittelkomponente A) können auch Polyester eingesetzt werden. Die Herstellung der in den erfindungsgemäßen Überzugsmitteln enthaltenen Polyester erfolgt nach den üblichen, dem Fachmann geläufigen Verfahren der Polykondensation von Polycarbonsäuren, wie Di- und/oder Tricarbonsäuren bzw. deren Anhydriden, gegebenenfalls an Anwesenheit von Monocarbonsäuren, Di-, und/oder Triolen oder höherwertigen Polyolen, gegebenenfalls in Anwesenheit von Monoalkoholen. Die Herstellung erfolgt beispielsweise in Gegenwart von üblichen Veresterungskatalysatoren und bei erhöhten Temperaturen von z.B. 180 - 250°C in der Schmelze. Gegebenenfalls können auch Schleppmittel wie z.B. Xylol verwendet werden.

Geeignete Monocarbonsäuren zur Herstellung der Polyester sind beispielsweise Benzoesäure, tert.-Butylbenzoesäure, Hexahydrobenzoesäure, gesättigte Fettsäuren, wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojafettsäure, Sorbinsäure, Erdnußfettsäure, Konjuenfettsäuren, Tallölfettsäure, Safflorölfettsäure sowie Gemische dieser oder anderer Monocarbonsäuren.

Geeignete höherfunktionelle Carbonsäuren bzw. Anhydride sind beispielsweise Phthalsäure(anhydrid), Isophthalsäure, Terephthalsäure, Tetrahydrophthalsäure(anhydrid), Hexahydrophthalsäure(anhydrid), 1,3- und 1,4-Cyclohexandicabonsäure, Maleinsäure(anhydrid), Bernsteinsäure(anhydrid), Fumarsäure, Adipinsäure, Sebacinsäure, Azelainsäure, Dimerfettsäuren, Trimerfettsäure, Trimellithsäure(anhydrid),Pyromellithsäure(anhydrid) und Gemische dieser oder anderer Säuren.

Geeignete einwertige Alkohole sind beispielsweise n-Hexanol, Cyclohexanol, Decanol, Dodecanol, Tetradecanol, Octanol, Octadecanol, natürliche und synthetische Fettalkohole wie z.B. Laurylalkohol, Ocenol 110/130 (Fa. Henkel) und Gemische dieser und anderer Alkohole. Die monohydroxyfunktionellen Alkohole können auch mit Carboxyfunktionen ausgestattet sein. Geeignet sind hier beispielsweise Dimethylolpropionsäure, Milchsäure, Apfelsäure, Weinsäure, epsilon-Hydroxycapronsäure, Rizinusölfettsäure oder epsilon-Caprolacton.

Geeignete mehrwertige Alkohole sind beispielsweise Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylolpropan, Glycerin, Pentaerythrit, Trimethylpentandiol, Dipentaerythrit und Gemische dieser oder anderer mehrwertiger Alkohole.

Ebenfalls geeignet sind Monoamino-hydroxy- und/oder carboxyverbindungen. Beispiele hierfür sind Aminoethanol, 2-Aminopropanol, Diethanolamin, Aminoessigsäure oder 6-Aminohexansäure.

Geeignete organische Lösemittel zur Herstellung des Polyesterharzes sind z.B. N-Methylpyrrolidon, Methylethylketon, Methylisobutylketon, Aceton, Xylol, Butylacetat bzw. Gemische dieser oder anderer Lösemittel.

Als Bindemittelkomponente A) können auch Polyester-modifizierte (Meth)acryl-Copolymere eingesetzt werden. Die Herstellung dieser Bindemittel erfolgt durch radikalische Copolymerisation in Gegenwart eines Polyesterharzes. Verwendbare Polyester sind beispielsweise solche, wie sie vorstehend als Bindemittelkomponente A) beschrieben wurden. Als Monomere zur Copolymerisation können beispielsweise solche eingesetzt werden, wie sie vorstehend zur Herstellung der als Komponente A) verwendbaren (Meth)acrylcopolymerisate beschrieben wurden. Die Art und Menge der Monomeren werden dabei so abgestimmt, daß die gewünschten Spezifikationen bezüglich Molmasse, OH-Gruppen-Verhältnis, OH-Zahl und Säurezahl erzielt werden.

Die Herstellung erfolgt beispielsweise als radikalische Lösungspolymerisation in Anwesenheit eines Radikalinitiators, wie sie bereits bei der Herstellung der erfindungsgemäßen (Meth)acryl-Copolymeren beschrieben wurde. Die Polymerisationsinitiatoren werden im allgemeinen beispielsweise in einer Menge von 0,1 bis 4 Gew.-%, bezogen auf die Monomeren-Einwaage zugesetzt. Bei der Polymerisation können die Monomeren auch getrennt bzw. zeitlich versetzt zudosiert werden. Beispielsweise geht man so vor, daß die gesamte oder eine Teilmenge des Polyesterharzes gegebenenfalls in einem organischen Lösemittel gelöst vorgelegt wird und die radikalische Polymerisation dann im Schoße dieses Polyesterharzes bzw. der Polyesterharzlösung durchgeführt wird. Als Lösemittel können solche eingesetzt werden, die auch bei der Polyesterharzsynthese benutzt werden, es können abe auch andere geeignete Lösemittel eingesetzt werden. Als organische Lösemittel eignen sich lacklübliche Lösemittel, wie sie später auch in dem erfindungsgemäßen Überzugsmittel eingesetzt werden können, beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe können ebenfalls im Verschnitt mit den oben genannten Lösemitteln eingesetzt werden. Besonders bevorzugt sind die in den erfindungsgemäßen Überzugsmitteln als Komponente C) einsetzbaren Polyalkylenglykoldialkylether, beispielsweise Polyethylenglykoldi-n-butylether, die zumindest einen Teil der Lösemittel bilden können. Zur Regelung des Molekulargewichts können auch hier Kettenüberträger mitverwendet werden.

Beispiele für Polyurethanpolyole der vorstehend definierten Komponente A) ergeben sich aus der Umsetzung von Polyisocyanaten, wie Di- und/oder höhere Polyisocyanate mit einem Überschuß an Polyolen, wie Di- und/oder höhere Polyole. Geeignete Di- und/oder andere Polyole sind solche, wie sie bereits bei der Beschreibung der Polyester aufgeführt wurden. Beispiele für geeignete Di- und/oder andere Polyisocyanate sind cycloaliphatische und aliphatische Polyisocyanate wie 1,2-Propylendiisocyanat, 2,3-Butylendiisocyanat, Tetramethylen-diisocyanat, 1,6-Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI) oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen. aufweisende Polyisocyanate.

Besonders gut für die Erfindung geeignet sind z.B. Biuret-, Isocyanurat- oder Urethangruppen aufweisende Modifizierungsprodukte der oben genannten einfachen Polyisocyanate, insbesondere Tris-(6-isocyanatohexyl)-biuret oder niedermolekulare, Urethangruppen aufweisende Polyisocyanate, wie sie durch Umsetzung von im Überschuß eingesetzten IPDI mit mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäß einsetzbaren Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/ oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylarharze verwendet.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 bis 4000 aufweisen.

Ebenfalls möglich ist die Verwendung von Copolymeren des vinylisch ungesättigten Monoisocyanates Dimethyl-m-isopropenylbenzylisocyanat, wie sie unter anderem in der DE-A-41 37 615 beschrieben sind.

Die Komponente A) kann frei sein von Lösemitteln oder aber Restlösemittel von ihrer Herstellung enthalten.

Die erfindungsgemäßen wäßrigen Überzugsmittelzusammensetzungen können für verschiedene Anwendungszwecke eingesetzt werden. Sollen sie beispielsweise als Hydrofüllerüberzugsmittel Verwendung finden, so sind besondere für Hydrofüller geeignete Bindemittelsysteme (Polyolkomponente A), solche, wie sie in DE-A-38 05 629, DE-A-39 36 288, DE-A-40 00748, DE-A-41 42 734 oder DE-A-41 42 816 beschrieben werden. Es handelt sich dabei um Bindemittel auf der Basis von Polyurethanen, Polyestern und/oder Polyesterurethanen, die OH-Gruppen und zusätzlich COOH-Gruppen enthalten. Die teilweise Neutralisation der COOH-Gruppen kann dazu ausgenutzt werden, um die Verbindungen in die Wasserphase überzuführen. Diese anionischen Bindemittel weisen bevorzugt Säurezahlen von 10 bis 100 mg KOH/g auf. Die OH-Zahlen liegen bevorzugt in der Größenordnung von 20 bis 250 mg KOH/g.

Die erfindungsgemäßen Überzugsmittel enthalten als Vernetzerkomponente B) Aminoplastharze, Phenoplastharze und/oder Polyisocyanate, die frei und/oder verkappt sein können.

Bei den Aminoplastharzvernetzern, die im folgenden auch als Aminharzvernetzer bezeichnet werden, kann es sich um übliche auf dem Lacksektor als Vernetzungsmittel verwendete Harze handeln. Zu geeigneten Aminoplastharzen zählen beispielsweise alkylierte Kondensate, die durch Umsetzung von Aminotriazinen und Amidotriazinen mit Aldehyden hergestellt werden. Zu deren Herstellung werden nach bekannten technischen Verfahren Amino- oder Amidogruppen tragende Verbindungen wie Melamin, Benzoguanamin, Dicyandiamid, Harnstoff, N,N'-Ethylenharnstoff in Gegenwart von Alkoholen, wie Methyl-, Ethyl-, Propyl-, iso-Butyl-, n-Butyl- und Hexylalkohol mit Aldehyden, insbesondere Formaldehyd, kondensiert. Die Reaktivität derartiger Aminharze wird bestimmt durch den Kondensationsgrad, das Verhältnis der Amin- bzw. Amid-Komponente zum Aldehyd und durch die Art des verwendeten Veretherungsalkohols.

Die Aminoplastharze können wasserverdünnbar oder nicht wasserverdünnbar sein. Beispiele für nicht wasserverdünnbare Aminharzvernetzer sind in Wasser kaum oder unlösliche butanol- oder isobutanolveretherte Melaminharze wie z.B. die Handelsprodukte Setamin[R] US 138 oder Maprenal[R] FM 610, mischveretherte Melaminharze, die sowohl butanol- als auch methanolverethert sind, wie z.B. Cymel[R] 254, sowie Hexamethyloxymethylmelaminharze wie z.B. Cymel[R] 301 oder Cymel[R] 303, wobei letztere zur Vernetzung einen externen Säurekatalysator wie z.B. p-Toluolsulfonsäure benötigen können.

Beispiele für wasserverdünnbare Aminharzvernetzer sind übliche hydrophile und damit wasserlösliche bzw. -verträgliche Melaminharze, wie z.B. methyl-veretherte Melaminharze wie z.B. Cymel[R] 325, Cymel[R] 327, Cymel[R] 350, Cymel[R] 370, Maprenal[R] MF 927.

Beispiele für ebenfalls geeignete Vernetzer sind Phenoplastharze, wie Reaktionsprodukte von Phenol oder substituierten Phenolen mit verschiedenen Aldehyden im molaren Überschuß in Gegenwart alkalischer Katalysatoren (Resol-Typ). Beispiele für phenolische Verbindungen sind Phenol, Kresol, Xylenol, Resorcin und substituierte Phenole wie p-tert.-Butylphenol, p-tert.-Amylphenol, p-Phenyl-phenol, Isothymol, Cardanol oder auch mehrkernige Phenole wie Dihydroxy-diphenylpropan (Bisphenol A) oder Dihydroxy-diphenylmethan (Bisphenol F). Als Ausgangsmaterial dienen auch phenolische Novolakharze, die gegebenenfalls mit Monocarbonsäuren, bevorzugt α-verzweigten Monocarbonsäuren, Monophenolen, die besonders mit C1- bis C18-Alkylgruppen substituiert sind oder auch Monoepoxiden wie α-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol.

Die erfindungsgemäßen Überzugsmittel können freie und/oder verkappte Polyisocyanate enthalten. Beispiel für verwendbare Isocyanate sind die bei der Beschreibung der Polyurethanharze aufgeführten. Die Isocyanatgruppierungen der eingesezten Polyisocyanate können frei sein, teilweise oder vollständig verkappt sein. Es können übliche Verkappungsmittel verwendet werden, z.B. 1,2-Propandiol, Malonsäuredimethylester, Malonsäurediethylester, Acetessigsäureethylester und/oder Butanonoxim sowie die weiteren, dem Fachmann geläufigen Verkappungsmittel. Als weitere Verkappungsmittel kommen z.B. Verbindungen in Frage, die nur eine einzige Amin-, Amid-, Imid-, lactam-, Thio- oder Hydroxylgruppe enthalten. Beispiele sind aliphatische oder cycloaliphatische Alkohole, wie n-Butanol, Isopropanol, tert.-Butanol, Furfurol, 2-Ethylhexanol, Cyclohexanol, Phenole, Kresol, tert.-Butylphenole, Dialkylaminoalkohole, wie Dimethylaminoethanol, Oxime wie Methylethylketoxim, Acetonoxim, Cyclohexanonoxim, Acetophenonoxim, Lactame wie epsilon-Caprolactam oder Pyrrolidon-2, Imide wie Phthalimid oder N-Hydroxy-maleinimid, Hydroxyalkylester, Hydroxamsäuren und deren Ester, N-Alkylamide wie Methylacetamid, Imidazole wie 2-Methylimidazol, Pyrazole wie 2,3-Dimethylpyrazol. Es können aber auch Gemische dieser Verkappungsmittel eingesetzt werden.

Die erfindungsgemäß als Komponente C) eingesetzten Polyalkylenglykoldialkylether stellen einen wesentlichen Teil der Erfindung dar. Durch die Verwendung dieser Lösemittel werden sowohl Kochsicherheit, Ablaufneigung als auch Lagerstabilität entscheidend positiv beeinflußt.

Das erfindungsgemäße Überzugsmittel liegt in einer wasserverdünnbaren Form vor. Sofern eine wäßrige Emulsion erstellt werden soll, wird das bei der Herstellung der Komponenten A) verwendete Lösemittel weitgehend entfernt. Dies kann beispielsweise destillativ, gegebenenfalls unter Vakuum erfolgen. Das erhaltene Harzkonzentrat, das einen hohen Festkörpergehalt von beispielsweise bis zu 90 Gew.-% oder mehr hat, kann dann über die sauren Gruppierungen der Komponente A) mit einer üblichen Base, z.B. Ammoniak oder einem organischen Amin, z.B. Triethylamin, neutralisiert werden; anschließend wird es mit so wenig Wasser angemischt, daß noch keine Phasenumkehr stattfindet. Das neutralisierte Harzkonzentrat der Komponente A) fungiert dann als Emulgatorharz. In dieses Emulgatorharz, das eine Wasser-in-Öl-Emulsion darstellt, kann dann die Komponente B), das Lösemittel Polyalkylenglykol-di-alkylether sowie weitere Lackadditive eingetragen werden. Anschließend kann dann nach Zugabe von weiterem Wasser beispielsweise unter starkem Rühren und erforderlichenfalls unter Erwärmen, beispielsweise auf Temperaturen von 30 bis 95°C, z.B. 50°C, unter Phasenumkehr die Herstellung der Öl-in-Wasser-Emulsion erfolgen.

1 bis 20 Gew.-% der emulgierten organischen Harzlösung bestehen aus Polyalkylenglykol-di-alkylether.

Ebenfalls kann das Harzkonzentrat A) nach seiner Konfektionierung mit Vernetzern, Lackadditiven und dem Lösemittel Polyalkylenglykol-di-alkylether mit Hilfe von üblichen, ionischen oder nicht-ionischen Emulgatoren emulgiert werden. Dies geschieht z.B. durch Homogenisieren des Harzkonzentrats und des nicht-ionischen Emulgators, gegebenenfalls unter Erwärmen, beispielsweise auf Temperaturen von 30 bis 80°C, z.B. 60°C. Ein derartiges Gemisch kann in einer üblichen Homogenisierungseinrichtung kontinuierlich oder diskontinuierlich emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Harzkonzentrat, eingesetzt.

Die erfindungsgemäßen Bindemittelzusammensetzungen können in üblicher Weise zu wäßrigen Überzugsmitteln formuliert werden. Dies erfolgt im allgemeinen durch Zusatz von Lösemitteln oder Wasser, um die jeweils erforderliche Applikationsviskosität zu erreichen.

Geeignete organische Lösemittel für die Herstellung von wäßrigen Überzugsmitteln, beispielsweise Lacken, sind solche, wie sie auch bei der Herstellung der Einzelkomponenten verwendet werden können. Beispiele für derartige Lösemittel sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether und insbesondere Polyalkylenglykol-di-alkylether, beispielsweise Polyethylenglykol-di-n-butylether.

Zur Herstellung der wäßrigen Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Weitere Beispiele für Additive sind Füllstoffe, wie z.B. Talkum und Silikate; Weichmacher, Lichtschutzmittel, Stabilisatoren und Verlaufsmittel, wie Silikonöle. Die erfindungsgemäßen Überzugsmittel können auf die gewünschte Applikationsviskosität durch entsprechende Regelung des Zusatzes von Lösemitteln und/oder Wasser und/oder Additiven eingestellt werden. Die Aushärtung von aus den wäßrigen Überzugsmitteln erstellten Überzügen kann in einem weiten Temperaturbereich von beispielsweise 20°C bis 180°C erfolgen, bevorzugt in dem Bereich zwischen 80°C und 150°C.

Die erfindungsgemäßen wäßrigen Überzugsmittel sind für Überzüge geeignet, die auf einer Vielzahl von Substraten haften, wie beispielsweise Holz, Textilien, Kunststoff, Glas, Keramik, Putz, Zement und insbesondere Metall. Die wäßrigen Überzugsmittel können auch im Mehrschichtverfahren eingesetzt werden. So können sie beispielsweise auf übliche Grundierungen, Basislacke, Füller oder auf bereits vorhandene Decklacke aufgetragen werden.

Ein besonders bevorzugtes Anwendungsgebiet für die erfindungsgemäßen Überzugsmittel stellt die Bereitstellung von wäßrigen Überzugsmitteln für Lackierungen, die eine hohe Kochsicherheit bei einer gleichzeitig sehr guten Ablaufsicherheit besitzen sollen.

Die vorliegende Erfindung betrifft somit auch Verfahren zur Herstellung von Überzügen auf verschiedenen Substraten, bei denen auf das Substrat ein erfindungsgemäßes Überzugsmittel appliziert wird, worauf getrocknet und gehärtet wird. Die Erfindung betrifft auch die Verwendung der erfindungsgemäßen Überzugsmittelzusammensetzungen als Hydrofüller, Wasserbasislacke, Wasserdecklacke oder Wasserklarlacke.

In jedem Fall erhält man mit den erfindungsgemäßen Überzugsmitteln Filme mit sehr guter Chemikalienbeständigkeit, sehr guter Ablaufsicherheit, sehr hoher Kochsicherheit und gutem Decklackstand bei sehr hohem Verarbeitungsfestkörper.

Die Applikation der erfindungsgemäßen Überzugsmittel kann in üblicher Weise erfolgen, beispielsweise durch Tauchen, Spritzen, Streichen oder auf elektrostatischem Wege.

Die folgenden Beispiele dienen zur Erläuterung der Erfindung.

### Beispiel 1

Herstellung eines Polyesters

1643,5 g Isononansäure, 1150,1 g Pentaerythrit, 1202,5 g Hexahydrophthalsäureanhydrid wurden mit 4 g unterphosphoriger Säure in einem mit Rührer, Abscheider, Thermometer und Rückflußkühler versehenen 6 Liter-Dreihalskolben bei 180 bis 220°C in der Schmelze auf eine Säurezahl von 25 mg KOH/g verestert. Der so erhaltene Polyester hat einen Einbrennrückstand von 98,1 % (1 h, 150°C), eine Hydroxylzahl von 146 mg KOH/g bei einer Säurezahl von 26,7 mg KOH/g.

### Beispiel 2

Herstellung eines Polyester-Acrylatharzes

In einen 4 Liter Vierhalskolben, der mit Rührer, Rückflußkühler, Tropftrichter und Thermometer versehen ist, wurden

| | |
|---|---|
| 600 g | Polyglykol BB-300 |
| 960 g | Polyester aus Beispiel 1 |
| 513 g | Glycidylester der Versaticsäure (Handelsname der Shell AG, Cardura E10) |

vorgelegt und auf 148°C unter Rühren erhitzt. Anschließend wird ein Gemisch aus

| 72 g | Laurylacrylat |
|------|---------------|
| 371 g | Styrol |
| 58 g | Isobutylacrylat |
| 202 g | Acrylsäure |
| 189 g | Hydroxyethylacrylat |
| 9 g | Di-tertiär-butylperoxid |
| 26 g | Tertiär-butyl-peroxy-2-ethylhexanoat |

in einem Zeitraum von 5 Stunden zudosiert. Dann wird bei 148°C noch 5 Stunden nachpolymerisiert. Das Harz hat einen Einbrennrückstand von 79,4 % (1 h, 150°C), eine Säurezahl von 30,5 mg KOH/g und eine OH-Zahl von 144 mg KOH/g.

**Beispiel 3**

Herstellung einer wäßrigen Polyester-Acrylat-Emulsion

In einem 6 Liter-Dreihalskolben, der mit Rührer, Thermometer und Tropftrichter versehen ist, werden 2455,0 g des in Beispiel 2 beschriebenen Polyester-Acrylatharzes unter Rühren auf 60°C erhitzt. Anschließend wird durch Zugabe von 47,1 g Dimethylethanolamin neutralisiert. Danach werden 1289,0 g vollentsalztes auf 60°C erwärmtes Wasser unter Rühren in 30 Minuten zudosiert. Die erhaltene Emulsion hat dann einen Einbrennrückstand von 50,9 % (1 h, 150°C) und einen pH-Wert von 8,5 (10 %ig in VE-Wasser).

**Beispiel 4**

Herstellung eines Polyester-Acrylatharzes

In einen 4-Liter-Vierhalskolben, der mit Rührer, Rückflußkühler, Tropftrichter und Thermometer versehen ist, werden

| 600 g | Butyldiglykol |
|-------|---------------|
| 960 g | Polyester aus Beispiel 1 |
| 513 g | Glycidylester der Versaticsäure |

vorgelegt und auf 148°C unter Rühren erhitzt. Anschließend wird ein Gemisch aus

| 72 g | Laurylacrylat |
|------|---------------|
| 371 g | Styrol |
| 58 g | Isobutylacrylat |
| 202 g | Acrylsäure |
| 189 g | Hydroxyethylacrylat |
| 9 g | Di-tertiär-butylperoxid |
| 26 g | Tertiär-butyl-peroxy-2-ethylhexanoat |

in einem Zeitraum von 5 Stunden zudosiert. Dann wird bei 148°C noch 5 Stunden nachpolymerisiert. Das Harz hat einen Einbrennrückstand von 83,3 % (1 h, 150°C), eine Säurezahl von 26,4 mg KOH/g und eine OH-Zahl von 144 mg KOH/g.

**Beispiel 5**

Herstellung einer Polyester-Acrylat-Emulsion

In einem 6-Liter-Dreihalskolben, der mit Rührer, Thermometer und Tropftrichter versehen ist, wurden 2750,0 g des in Beispiel 4 beschriebenen Polyester-Acrylatharzes unter Rühren auf 60°C erhitzt. Anschließend wird durch Zugabe von 48,0 g Dimethylethanolamin neutralisiert. Danach wurden 1068,0 g vollentsalztes auf 60°C erwärmtes Wasser unter Rühren in 30 Minuten zudosiert. Die erhaltene Emulsion hat dann einen Einbrennrückstand von 59,2 % (1 h, 120°C) und einen pH-Wert von 8,2 (10 %ig in VE-Wasser).

**Beispiel 6**

Herstellung eines Polyester-Acrylatharzes

In einen 4 Liter Vierhalskolben, der mit Rührer, Rückflußkühler, Tropftrichter und Thermometer versehen ist, wurden

| | |
|---|---|
| 600 g | Di-propylenglykol-di-methylether (Handelsname DOW: Proglyde DMM) |
| 960 g | Polyester aus Beispiel 1 |
| 513 g | Glycidylester der Versaticsäure |

vorgelegt und auf 148°C unter Rühren erhitzt. Anschließend wird ein Gemisch aus

| | |
|---|---|
| 72 g | Laurylacrylat |
| 371 g | Styrol |
| 58 g | Isobutylacrylat |
| 202 g | Acrylsäure |
| 189 g | Hydroxyethylacrylat |
| 9 g | Di-tertiär-butylperoxid |
| 26 g | Tertiär-butyl-peroxy-2-ethylhexanoat |

in einem Zeitraum von 5 Stunden zudosiert. Dann wird bei 148°C noch weitere 5 Stunden nachpolymerisiert. Das Harz hat einen Einbrennrückstand von 80,3 % (1 h, 150°C), eine Säurezahl von 28,4 mg KOH/g und eine OH-Zahl von 144 mg KOH/g.

**Beispiel 7**

Herstellung einer Polyester-Acrylat-Emulsion

In einen 6-Liter-Dreihalskolben, der mit Rührer, Thermometer und Tropftrichter versehen ist, werden 2853,0 g des in Beispiel 6 beschriebenen Polyester-Acrylatharzes unter Rühren auf 60°C erhitzt. Anschließend wird durch Zugabe von 51,6 g Dimethylethanolamin neutralisiert. Danach werden 978,0 g vollentsalztes auf 60°C erwärmtes Wasser unter Rühren in 30 Minuten zudosiert. Die erhaltene Emulsion hat dann einen Einbrennrückstand von 59,0 % (1 h, 120°C) und einen pH-Wert von 8,0 (10 %ig in VE-Wasser).

**Beispiel 8**

| Wasserlacke aus Beispielen 3, 5 7 | Erfindung | Vergleiche | |
|---|---|---|---|
| | I | II | III |
| Polyester-Acrylat-Emulsion aus Beispiel 3 | 50,30 | --- | --- |
| Polyester-Acrylat-Emulsion aus Beispiel 5 | --- | 46,50 | --- |
| Polyester-Acrylat-Emulsion aus Beispiel 7 | --- | --- | 46,70 |
| Melaminharz | 14,40 | 15,50 | 15,50 |
| Lichtschutzmittel | 0,87 | 0,93 | 0,93 |
| Verlaufsmittel | 0,18 | 0,19 | 0,19 |
| Amingeblockter Säurekatalysator | 1,20 | 1,29 | 1,29 |
| VE-Wasser | 13,30 | 14,32 | 14,12 |
| Dimethylethanolamin (10 %ig in VE-Wasser) | 5,10 | 5,48 | 5,48 |

(fortgesetzt)

| Wasserlacke aus Beispielen 3, 5 7 | Erfindung | Vergleiche | |
|---|---|---|---|
| | I | II | III |
| VE-Wasser | 14,65 $\overline{100,00}$ | 15,79 $\overline{100,00}$ | 15,79 $\overline{100,00}$ |
| VE = vollentsalzt | | | |

Die unter I, II und III bezeichneten Wasserlacke werden mit VE-Wasser auf 30 sec. $AK_4/25°C$ spritzfähig eingestellt und im üblichen Naß-in-Naß-Verfahren auf wasserverdünnbaren Basislack verarbeitet.

| **Lacktechnische Ergebnisse** | I | II | III |
|---|---|---|---|
| Kochgrenze µm | 66 | 50 | 40 |
| Ablaufneigung µm | 45 | 30 | 40 |
| Lagerstabilität | i.O. | n.i.O. | i.O. |
| Decklackstand | i.O. | n.i.O. | i.O. |

**Patentansprüche**

1. Wäßrige Überzugsmittelzusammensetzung, enthaltend Bindemittel auf der Basis von wasserverdünnbaren Polyolverbindungen in der Form von hydroxyfunktionellen Poly(meth)acrylaten, Polyurethanen, Polyethern, Polyestern und/oder Polyester-modifizierten Poly(meth)acrylaten, zusammen mit Aminoplastharzen, Phenoplastharzen und/oder Polyisocyanaten, die frei und/oder verkappt sein können, **gekennzeichnet durch** den Gehalt an einem oder mehreren Poly-($C_2$ bis $C_3$)alkylenglykol-di($C_1$ bis $C_4$)alkylethern, wobei diese 3 bis 10 von $C_2$ und/oder $C_3$-Alkylenglykolen abgeleitete Einheiten aufweisen.

2. Überzugsmittelzusammensetzung nach Anspruch 1, **dadurch gekennzeichnet, daß** sie 1 bis 20 Gew.-% Poly-($C_2$ bis $C_3$)alkylenglykol-di($C_1$ bis $C_4$)alkylether, bezogen auf die Summe der Gewichte der Bindemittel und der Poly-($C_2$ bis $C_3$)alkylenglykol-di($C_1$ bis $C_4$)alkylether enthält.

3. Überzugsmittelzusammensetzung nach einem der Ansprüche 1 oder 2, worin die Veretherungsalkohole der Poly-($C_2$ bis $C_3$)alkylenglykol-di($C_1$ bis $C_4$)alkylether Alkohole mit 1 und/oder 4 Kohlenstoffatomen sind.

4. Überzugsmittelzusammensetzung nach Anspruch 3, worin die Poly-($C_2$ bis $C_3$)alkylenglykol-di($C_1$ bis $C_4$)alkylether Poly-($C_2$ bis $C_3$)alkylenglykol-di-n-butylether sind.

5. Überzugsmittelzusammensetzung nach einem der vorhergehenden Ansprüche, worin der Poly-($C_2$ bis $C_3$)alkylenglykol-di($C_1$ bis $C_4$)alkylether ein Polyethylenglykol-di-n-butylether ist.

6. Überzugsmittelzusammensetzung nach einem der Ansprüche 1 bis 5, enthaltend

   A) 40 bis 90 Gew.-% eines oder mehrerer Bindemittel auf der Basis einer oder mehrerer wasserverdünnbarer oligomerer oder polymerer Polyolverbindungen in der Form von hydroxyfunktionellen Poly(meth)acrylaten, Polyurethanen, Polyethem, Polyestern und/oder Polyester-modifizierten Poly(meth)acrylaten mit einer Hydroxylzahl von 20 bis 300 mg KOH/g, einer Säurezahl von 0 bis 100 mg KOH/g, einem Zahlenmittel des Molekulargewichts von 500 bis 10000, und einer Glasübergangstemperatur von - 20 bis + 70 C;

   B) 10 bis 60 Gew.-% eines oder mehrerer Aminoplastharze Phenoplastharze und/oder freier und/oder verkappter Polyisocyanate;

   C) 1 bis 20 Gew.-% Poly-($C_2$ bis $C_3$)alkylenglykol-di($C_1$ bis $C_4$)alkylether

   sowie gegebenenfalls ein oder mehrere organische Lösemittel und weitere lackübliche Additive, wobei die Summe der Komponenten A) bis C) jeweils 100 Gew.-% ergibt.

7. Verfahren zur Mehrschichtlackierung von Substraten durch Auftrag einer Grundierungsschicht, sowie gegebenenfalls einer Füllerschicht, auf die eine Decklackschicht, die aus Basislackschicht und Klarlackschicht bestehen kann, aufgetragen wird, **dadurch gekennzeichnet, daß** zur Herstellung der Füllerschicht, Decklackschicht, Basislackschicht und/oder Klarlackschicht ein Überzugsmittel nach einem der Ansprüche 1 bis 6 aufgetragen wird.

8. Verfahren nach Anspruch 7, **dadurch gekennzeichnet, daß** eine Decklack- oder Klarlackschicht aus einem Überzugsmittel gemäß einem der Ansprüche 1 bis 6 ausgebildet wird.

9. Verfahren nach einem der Ansprüche 7 oder 8, **dadurch gekennzeichnet, daß** die aus dem Überzugsmittel gemäß einem der Ansprüche 1 bis 6 erstellte Schicht oder die aus diesen Überzugsmitteln erstellten Schichten in einem Temperaturbereich von 80 bis 150 °C eingebrannt werden.

10. Verwendung der wäßrigen Überzugsmittel nach einem der Ansprüche 1 bis 6 bei der Mehrschichtlackierung von Substraten.

11. Verwendung der Überzugsmittel nach einem der Ansprüche 1 bis 6 bei der Lackierung von Fahrzeugen oder deren Teilen.

12. Verwendung von Poly-($C_2$ bis $C_3$)alkylenglykol-di($C_1$ bis $C_4$)alkylether, welche 3 bis 10 von $C_2$ und/oder $C_3$-Alkylenglykolen abgeleitete Einheiten aufweisen, als Zusatz zu wäßrigen Überzugsmittelzusammensetzungen auf der Basis von wasserverdünnbaren Polyolverbindungen in der Form von hydroxyfunktionellen Poly(meth)acrylaten, Polyurethanen, Polyethern, Polyestern und/oder Polyester-modifizierten Poly(meth)acrylaten, zusammen mit Aminoplastharzen, Phenoplastharzen und/oder Polyisocyanaten, die frei und/oder verkappt sein können.

13. Verwendung von Polyethylenglykol-di-n-butylether als Zusatz zu wäßrigen Überzugsmittelzusammensetzungen auf der Basis von wasserverdünnbaren Polyolverbindungen in der Form von hydroxyfunktionellen Poly(meth)acrylaten, Polyurethanen, Polyethern, Polyestern und/oder Polyester-modifizierten Poly(meth)acrylaten, zusammen mit Aminoplastharzen, Phenoplastharzen und/oder Polyisocyanaten, die frei und/oder verkappt sein können.

**Claims**

1. Aqueous coating composition containing binders based on water-dilutable polyol compounds in the form of hydroxy-functional poly(meth)acrylates, polyurethanes, polyethers, polyesters and/or polyester-modified poly(meth)acrylates, together with aminoplastic resins, phenolic resins and/or free or masked polyisocyanates, **characterised by** the content of one or more poly($C_2$-$C_3$)alkylene glycol di($C_1$-$C_4$)alkyl ethers, wherein these contain 3 to 10 units derived from $C_2$ and/or $C_3$ alkylene glycols.

2. Coating composition according to claim 1, **characterised in that** it contains 1 to 20 % by weight of poly($C_2$-$C_3$) alkylene glycol di($C_1$-$C_4$)alkyl ethers, relative to the sum of weights of the binders and poly($C_2$-$C_3$)alkylene glycol di($C_1$-$C_4$)alkyl ethers.

3. Coating composition according to either of claims 1 or 2, wherein the etherification alcohols of the poly($C_2$-$C_3$) alkylene glycol di($C_1$-$C_4$)alkyl ethers are alcohols having 1 and/or 4 carbon atoms.

4. Coating composition according to claim 3, wherein the poly($C_2$-$C_3$) alkylene glycol di ($C_1$-$C_4$) alkyl ethers comprise poly($C_2$-$C_3$)alkylene glycol di-n-butyl ethers.

5. Coating composition according to- any of the preceding claims, wherein the poly($C_2$-$C_3$)alkylene glycol di($C_1$-$C_4$) alkyl ether comprises a polyethylene glycol di-n-butyl ether.

6. Coating composition according to any of claims 1 to 5, containing:

   A) 40 to 90 % by weight of one or more binders based on one or more water-dilutable oligomeric or polymeric polyol compounds in the. form of hydroxy-functional poly(meth)acrylates, polyurethanes, polyethers, polyesters and/or polyester-modified poly(meth)acrylates having a hydroxyl value of 20 to 300 mg of KOH/g, an acid value of 0 to 100 mg of KOH/g, a number average molecular weight of 500 to 10,000 and a glass transition temperature of -20 to +70°C;

B) 10 to 60 % by weight of one or more aminoplastic resins, phenolic resins and/or free and/or masked polyisocyanates;

C) 1 to 20 % by weight of poly($C_2$-$C_3$)alkylene glycol di($C_1$-$C_4$) alkyl ethers

optionally together with one or more organic solvents and further conventional lacquer additives,
wherein the sum of components A) to C) is in each case 100 % by weight.

7. Process for the multi-layer lacquer coating of substrates by applying a priming layer, optionally together with a surfacer layer, onto which a topcoat lacquer layer, which may consist of a base lacquer layer and clear lacquer layer, is applied, **characterised in that** to produce the surfacer layer, topcoat lacquer layer, base lacquer layer or clear lacquer layer a coating composition according to any of claims 1 to 6 is applied.

8. Process according to claim 7, **characterised in that** a topcoat lacquer layer or clear lacquer layer is formed from a coating according to any of claims 1 to 6.

9. Process according to either of claims 7 or 8, **characterised in that** the layer prepared from the coating composition according to any of claims 1 to 6 or the layers prepared from these coating compositions are stoved within a temperature range from 80 to 150°C.

10. Use of the aqueous coating composition according to any of claims 1 to 6 for multi-layer lacquer coating of substrates.

11. Use of the coating composition according to any of claims 1 to 6 for lacquer coating of vehicles or components thereof.

12. Use of poly($C_2$-$C_3$)alkylene glycol di($C_1$-$C_4$)alkyl ethers comprising 3 to 10 units derived from $C_2$ and/or $C_3$ alkylene glycols as an additive to aqueous coating compositions based on water-dilutable polyol compounds in the form of hydroxy-functional poly(meth)acrylates, polyurethanes, polyethers, polyesters and/or polyester-modified poly (meth)acrylates, together with aminoplastic resins, phenolic resins and/or free or masked polyisocyanates.

13. Use of polyethylene glycol di-n-butyl ether as an additive to aqueous coating compositions based on water-dilutable polyol compounds in the form of hydroxy-functional poly(meth)acrylates, polyurethanes, polyethers, polyesters and/or polyester-modified poly(meth)acrylates together with aminoplastic resins, phenolic resins and/or free or masked polyisocyanates.

**Revendications**

1. Composition aqueuse de revêtement, contenant des liants à base de polyols diluables à l'eau, sous forme de poly (méth)acrylates à fonctionnalité hydroxy, de polyuréthannes, de polyéthers, de polyesters et/ou de poly(méth) acrylates modifiés par un polyester, avec des résines aminoplastes, des résines phénoplastes et/ou des polyisocyanates, qui peuvent être libres et/ou coiffés, **caractérisée par** la présence d'un ou plusieurs éthers di(alkyliques en $C_1$ à $C_4$) de poly(alkylène en $C_2$ à $C_3$) - glycol, ces derniers contenant de 3 à 10 motifs qui dérivent d'(alkylène en $C_2$ et/ou $C_3$)glycols.

2. Composition de revêtement selon la revendication 1, **caractérisée en ce qu'**elle contient 1 à 20 % en poids d'un éther di (alkylique en $C_1$ à $C_4$) d'un poly(alkylène en $C_2$ à $C_3$)glycol, par rapport au poids total des liants et des éthers di(alkyliques en $C_1$ à $C_4$) d'un poly(alkylène en $C_2$ à $C_3$) glycol.

3. Composition de revêtement selon l'une des revendications 1 ou 2, dans laquelle les alcools d'éthérification des éthers di(alkyliques en $C_1$ à $C_4$) d'un poly(alkylène en $C_2$ à $C_3$)glycol sont des alcools ayant 1 et/ou 4 atomes de carbone.

4. Composition de revêtement selon la revendication 3, dans laquelle les éthers di(alkyliques en $C_1$ à $C_4$) d'un poly (alkylène en $C_2$ à $C_3$)glycol sont des éthers di-n-butyliques d'un poly(alkylène en $C_2$ à $C_3$)glycol.

5. Composition de revêtement selon l'une des revendications précédentes, dans laquelle l'éther di(alkylique en $C_1$

**13**

à C$_4$) d'un poly(alkylène en C$_2$ à C$_3$)-glycol est un éther di-n-butylique du polyéthylèneglycol.

6. Composition de revêtement selon l'une des revendications 1 à 5, contenant

A) de 40 à 90 % en poids d'un ou plusieurs liants à base d'un ou plusieurs polyols oligomères ou polymères diluables à l'eau, sous forme de poly(méth)-acrylates à fonctionnalité hydroxy, de polyuréthannes, de polyéthers, de polyesters et/ou de poly(méth)acrylates modifiés par un polyester, ayant un indice d'hydroxyle de 20 à 300 mg KOH/g, un indice d'acide de 0 à 100 mg KOH/g, une masse moléculaire moyenne en nombre de 500 à 10 000 et une température de transition vitreuse de -20 à +70°C ;
B) de 10 à 60 % en poids d'une ou plusieurs résines aminoplastes, résines phénoplastes et/ou d'un ou plusieurs polyisocyanates, libres et/ou coiffés ;
C) de 1 à 20 % en poids d'un éther di(alkylique en C$_1$ à C$_4$) d'un poly(alkylène en C$_2$ à C$_3$)glycol,

et éventuellement un ou plusieurs solvants organiques et plusieurs additifs usuels dans la technique des peintures, la somme des composants A) à C) faisant 100 % en poids.

7. Procédé d'application d'un système de peinture multicouches sur des subjectiles, par application d'une couche de base, et éventuellement d'une couche d'un apprêt garnissant, sur laquelle on applique une couche de vernis de finition, qui peut être constituée d'une couche de vernis de base et d'une couche de vernis transparents, **caractérisé en ce que**, pour préparer la couche d'apprêt garnissant, la couche de vernis de finition, la couche de vernis de base et/ou la couche de vernis transparents, on applique une composition de revêtement selon l'une des revendications 1 à 6.

8. Procédé selon la revendication 7, **caractérisé en ce qu'**une couche de vernis de finition ou une couche de vernis transparent est constituée d'une composition de revêtement selon l'une des revendications 1 à 6.

9. Procédé selon l'une des revendications 7 ou 8, **caractérisé en ce que** la couche obtenue à partir de la composition de revêtement selon l'une des revendications 1 à 6, ou les couches obtenues à partir de ces compositions de revêtement, sont cuites au four sur une plage de températures de 80 à 150°C.

10. Utilisation des compositions aqueuses de revêtement selon l'une des revendications 1 à 6 pour l'application d'un système de peinture multicouches sur des subjectiles.

11. Utilisation des compositions de revêtement selon l'une des revendications 1 à 6, lors du laquage de véhicules ou de leurs éléments.

12. Utilisation d'éthers di(alkyliques en C$_1$ à C$_4$) d'un poly(alkylène en C$_2$ à C$_3$)glycol, qui comportent de 3 à 10 motifs dérivant d'(alkylène en C$_2$ et/ou C$_3$)glycols, en tant qu'additifs à des compositions aqueuses de revêtement à base de polyols diluables à l'eau sous forme de poly(méth)acrylates à fonctionnalité hydroxy, de polyuréthannes, de polyéthers, de polyesters et/ou de poly(méth)acrylates modifiés par des polyesters, ainsi que de résines aminoplastes, de résines phénoplastes et/ou de polyisocyanates, qui peuvent libres et/ou coiffés.

13. Utilisation de l'éther, di-n-butylique du polyéthylèneglycol en tant qu'additif à des compositions aqueuses de revêtement à base de polyols diluables à l'eau, sous forme de poly(méth)acrylates à fonctionnalité hydroxy, de polyuréthannes, de polyéthers, de polyesters et/ou de poly(méth)acrylates modifiés par un polyester, ainsi que de résines aminoplastes, de résines phénoplastes et/ou de polyisocyanates, qui peuvent libre et/ou coiffés.